# EUROPÄISCHE PATENTANMELDUNG

(11) **EP 3 656 594 A1**
(43) Veröffentlichungstag der Anmeldung: **27.05.2020**
(21) Anmeldenummer: 19209641.0
(22) Anmeldetag: 18.11.2019
(51) Int. Cl.: B60K 6/48, B60K 6/485, B60K 6/387, B60K 6/547, B60W 20/15, B60W 10/06, B60W 10/08, B60W 10/02, F02D 41/00, B60W 30/19, B60K 6/24

(54) **VERFAHREN ZUR STEUERUNG EINES HYBRIDANTRIEBSSTRANGS EINES KRAFTFAHRZEUGES MIT EINER ABGASRÜCKFÜHRUNG**

(30) Priorität: 22.11.2018 DE 102018220091
(71) Anmelder: Volkswagen AG, 38440 Wolfsburg (DE)
(72) Erfinder: Maas, Christian, 38179 Schwülper (DE); Grote, Andreas, 38176 Wendeburg (DE); Block, Gerald, 38165 Lehre (DE); Brandes, Kerstin, 38176 Wendeburg (DE)

(57) **Zusammenfassung**

Die Erfindung betrifft ein Verfahren zur Steuerung und/oder Regelung eines Hybridantriebsstrangs eines Kraftfahrtzeuges, wobei Abgas einem Abgasstrang entnommen und einer Frischluftzuvor eines Verbrennungsmotors zugeführt wird, wobei im Falle eines negativen Lastsprungs das restliche rückgeführte Abgas aus der Frischluftzuvor gespült wird.

Das Verfahren ist dadurch verbessert, dass nach dem negativem Lastsprung der Verbrennungsmotor mit einer geringeren Last weiterläuft und gleichzeitig mittels der E-Maschine das vom Verbrennungsmotor eingespeiste Moment rekuperiert wird, wobei in Summe kein positives Moment am Ausgang des Antriebsstrangs anliegt.

## Beschreibung

Die Erfindung betrifft ein Verfahren zur Steuerung und/oder Regelung eines Hybridantriebsstranges eines Kraftfahrzeuges, wobei Abgas einem Abgasstrang entnommen und einer Frischluftzufuhr eines Verbrennungsmotors zugeführt wird mit den Merkmalen des Oberbegriffs des Patentanspruchs 1.

Eine solche Abgasrückführung stellt eine Maßnahme zur Effizienzsteigerung des Verbrennungsmotors, insbesondere eines Ottomotors dar. Durch die Abgasrückführung wird unter anderem die Kalorik des Arbeitsprozesses positiv beeinflusst und zum anderen wird die Klopfneigung reduziert, was ebenfalls zu einem effizienteren Verbrennungsablauf beiträgt.

Der Hybridantriebsstrang weist ferner mindestens eine E-Maschine auf. Die E-Maschine bezieht die elektrische Energie aus einer Batterie, wenn die E-Maschine als Elektromotor arbeitet. Wenn die E-Maschine als Elektromotor arbeitet, kann die E-Maschine den Verbrennungsmotor beim Anfahren und Beschleunigen unterstützen. Dies ermöglicht eine kleinere und verbrauchsgünstigere Auslegung des Verbrennungsmotors. Die Batterie kann von der E-Maschine aufgeladen werden, indem die E-Maschine als Generator arbeitet, während der Verbrennungsmotor die Antriebsleistung erbringt oder beim Bremsen.

Aus der DE 10 2017 108 739 A1 ist ein Hybridantriebsstrang mit einem Verbrennungsmotor, einer E-Maschine und einer Abgasrückführung bekannt. Bei dem entsprechenden Verfahren wird nun eine Kraftstoffzufuhr des Verbrennungsmotors deaktiviert. In einem folgenden Verfahrensschritt wird der Verbrennungsmotor ohne Kraftstoffzufuhr für weitere 1 bis 3 Sekunden durch die E-Maschine gedreht, um das Spülen von restlichem rückgeführtem Abgas im Ansaugkrümmer zu beschleunigen. Durch vollständiges Öffnen einer Ansaugdrosselklappe während des Drehens können Abgasreste aus dem AGR-System und dem Luftansaugsystem herausgespült werden und das Luftansaugsystem kann mit frischer Ansaugluft aufgefüllt werden. Durch Herausspülen von Abgasresten aus dem Luftansaugsystem und dem AGR-System können Verbrennungsstabilitätsprobleme bei einem nachfolgenden Neustart des Verbrennungsmotors vermieden werden. Der Verbrennungsmotor kann ohne Kraftstoffzufuhr bei einer ausgewählten Kraftmaschinendrehzahl basierend auf der Kraftmaschinendrehzahl gedreht werden, bevor die Kraftstoffeinspritzdüsen abgeschaltet worden sind. Als Alternative kann die ausgewählte Kraftmaschinendrehzahl eine Drehzahl sein, die sowohl für den Verbrennungsmotor als auch für das Getriebe effizient ist. Dementsprechend ist die Spülzeit, die zum vollständigen Herausspülen der rückgeführten Abgase erforderlich ist, eine Funktion der Verbrennungsmotordrehzahl und einer Drosselklappenposition. In einem anderen Beispiel kann der Verbrennungsmotor ohne Kraftstoffzufuhr bei einer Verbrennungsmotordrehzahl gedreht werden, die mindestens einer Anschleppdrehzahl des Verbrennungsmotors entspricht. Neben der Beschleunigung der Spülung ermöglicht dies, dass der Verbrennungsmotor im Falle eines Sinneswandels des Fahrers schnell neugestartet wird, beispielsweise wenn der Bediener ein angefordertes Verbrennungsmotordrehmoment erhöht, kurz nachdem die Verbrennungsmotordrehmomentanforderung unter den Schwellwert gefallen ist. Zum Beispiel kann als Reaktion auf eine Anzeige eines Sinneswandels des Bedieners die Steuerung beginnen, Kraftstoff zum Verbrennungsmotor zuzuführen und den Verbrennungsmotor von der Anschleppdrehzahl hochzudrehen, um so die Drehmomentanforderung des Bedieners zu erfüllen. In wieder anderen Beispielen kann der Verbrennungsmotor ohne Kraftstoffzuvor bei einer Verbrennungsmotordrehzahl gedreht werden, die ermöglicht, dass die rückgeführten Abgase so schnell wie möglich aus dem Luftansaugtrakt gespült werden.

Aus der DE 101 51 502 A1 ist eine Methode zur Steuerung eines Verbrennungsmotors mit mehreren Kraftstoffeinspritzventilen bekannt. Es ist ein System zur Steuerung der Kraftstoffverdunstung einschließlich eines Verdunstungsgasmanagementventils zwischen dem Kraftstoffbehälter und einem Ansaugkrümmer und einem AGR-Ventil zwischen dem Abgaskrümmer und dem Ansaugkrümmer vorhanden. Das Schließen des Verdunstungsgasmanagementventils und AGR-Ventils wird ein Teil des Motorabstellprogramms in Reaktion auf einem Motorabstellbefehl, nachdem die Kraftstoffzufuhr beendet worden ist, wird innerhalb einer abstellbaren Zeit sichergestellt, dass kein unerwünschter Restkraftstoff sich im Ansaugkrümmer befindet. Der Verbrennungsmotor wird von einem Generator weiter gedreht, bis die einzustellende Zeit abgelaufen ist. Diese Spülzeit ist einstellbar. Das Verfahren nutzt einen Merker "Motor_läuft", der aussagt, ob eine Verbrennung stattfindet, oder durch den Verbrennungsmotordrehmoment erzeugt wird. Der Merker wird beim Motorabstellprogramm auf 0 gesetzt, wenn das Spülen des Ansaugkümmers abgeschlossen ist. Ist der Merker "Motor_läuft" gleich 0, werden alle Zeitgeber und Merker im Abstellprogramm zurückgesetzt, und der Motorabstellprozess wird aktiviert.

Wenn der Fahrer von Gaspedal geht und somit ein negativer Lastsprung auftritt, bedeutet dies für die Motorsteuerung, dass die Momentenanforderung seitens des Fahrers von beispielsweise Volllast auf null springt. Der Verbrennungsmotor sollte also möglichst sofort kein Drehmoment mehr abgeben, was durch Ausblendung der Einspritzung und somit dem Unterbinden der Verbrennung realisiert werden kann. Unter Umständen ist es aber notwendig, den Motor einige Zyklen bei niedriger Last weiterlaufen zu lassen, um einen negativen Lastschlag zu vermeiden oder um unerwünschte Temperaturgradienten des Abgases in der Abgasanlage zu begrenzen. Dies kann insofern zu Problemen führen, weil einerseits die AGR-Verträglichkeit bei niedrigen Lasten deutlich eingeschränkter ist als bei hohen Lasten und andererseits das zurückgeführte Abgas in die Ansaugstrecke eingeleitet wird, so dass selbst bei sofortigem Schließen der AGR-Ventile eine gewisse Anzahl an Arbeitsspielen benötigt wird, bis in die Zylinder reine Luft, d.h. ohne AGR-Anteil, gelangt. Da bei niedriger Last die Zylinder weniger Füllung haben, bedeutet es gleichzeitig, dass sich die Anzahl an Arbeitsspielen, bis das restliche AGR-Gas durchgespült worden ist, vergrößert. Es tritt somit ein Zielkonflikt auf, auf der einen Seite möglichst wenig Moment vom Verbrennungsmotor an den Antriebsstrang abzugeben und auf der anderen Seite den Verbrennungsmotor zumindest bei so viel Last betreiben zu können, dass er aussetzerfrei mit der vorhanden AGR-Rate brennt. Verstärkt wird die Problematik, wenn die AGR-Strecke zusätzlich Kraftstoff eingespritzt wird. In diesem Fall ist auch die sofortige Einspritzausblendung keine Option als Reaktion auf den Fahrerwunsch, da mit der AGR auch dampfförmiger Kraftstoff unverbrannt durch die Brennräume gepumpt würde, der zusammen mit der Luft im Katalysator reagieren würde.

Der Erfindung liegt daher die Aufgabe zugrunde, das gattungsbildende Verfahren zu verbessern.

Die zuvor aufgezeigt Aufgabe ist nun durch ein Verfahren mit den Merkmalen des Patentanspruches 1 gelöst.

Erfindungsgemäß wird das Verfahren nach dem Auftreten eines negativen Lastsprungs dadurch weitergeführt, dass nach dem negativem Lastsprung der Verbrennungsmotor mit einer geringeren Last weiterläuft und gleichzeitig mittels der E-Maschine das vom Verbrennungsmotor eingespeiste Moment rekuperiert wird, wobei in Summe kein positives Moment am Ausgang des Antriebsstrangs anliegt.
Der Verbrennungsmotor läuft mit einer geringeren Last weiter, die benötigt wird, um die restlichen rückgeführten Abgase (AGR-Anteile) aus dem Ansaugsystem zu befördern, wobei gleichzeitig das vom Verbrennungsmotor eingespeiste Moment durch die E-Maschine rekuperiert wird. Damit liegt in Summe ebenfalls kein positives Moment am Ausgang des Antriebsstangs an. Der Ausgang des Antriebsstrangs wird durch die Antriebsräder gebildet. Es ist möglich, so AGR-Anteile auszuspülen, ohne dass ein positives Drehmoment an den Antriebsrädern anliegt.

Ferner ist es denkbar, den Verbrennungsmotor zusätzlich in einem wirkungsgradoptimalen Lastpunkt weiter zu betreiben und die dann zusätzlich generierte elektrische Energie zum nachfolgenden Beschleunigen oder zur elektrischen Reichweitenerhöhung zu nutzen.

Ferner besteht die Möglichkeit, dass das vom Verbrennungsmotor eingespeiste Moment von der E-Maschine überkompensiert wird, um ein bremsendes Reibmoment eines geschleppten Verbrennungsmotors darzustellen, das der Fahrer im Grunde nach Rücknahme des Fahrpedals erwartet. Im Summe kann durch diese gezielte Steuerung des Verbrennungsmotors und der E-Maschine einerseits erreicht werden, dass das Problem der durchzuspülenden AGR-Anteile gelöst wird und andererseits die dabei freiwerdende mechanische Energie in Form von elektrischer Energie zwischengespeichert wird.

Es gibt mehrere Möglichkeiten, wie die E-Maschine in den Antriebsstrang eingebunden ist. Die E-Maschine kann motorseitig einer Kupplung angeordnet sein, wobei nach dem negativen Lastsprung die Kupplung geöffnet wird, wobei die E-Maschine im Rahmen einer Drehzahlregelung des Verbrennungsmotors die mechanische Energie rekuperiert.

Eine Möglichkeit, den Verbrennungsmotor weiterlaufen zu lassen, ohne Moment an den Antriebsstrang abzugeben, ist das Öffnen einer Kupplung zwischen dem Verbrennungsmotor und einem Getriebe, wobei in diesem Fall die E-Maschine im Rahmen einer Drehzahlregelung des Motors die mechanische Energie rekuperiert. In dieser Ausgestaltung ist die E-Maschine aus der Sicht der Kupplung auf der Motorseite angeordnet. Hierbei ist keinerlei Bremswirkung auf den Antriebsstrang durch die E-Maschine möglich.

Ferner kann die E-Maschine auf einer Getriebeseite der Kupplung angeordnet sein, wobei im Falle des negativen Lastsprungs die Kupplung geschlossen ist und der Antriebsstrang mittels der E-Maschine mit einem negativen Moment beaufschlagt wird. Bevorzugt ist diese Variante mit geschlossener Kupplung aufgrund der Möglichkeit, zusätzlich den Antriebsstrang mit negativem Moment zu beaufschlagen.

Diese Steuerungsstrategie von Verbrennungsmotor und E-Maschine kann für weitere dynamische Vorgänge genutzt werden. Eine Möglichkeit ist dabei ein Gangwechsel. Der negative Lastsprung kann bei einem Hybridantriebsstrang mit einem Handschaltgetriebe auftreten, nachdem der Fahrer auskuppelt, um den Gang zu wechseln, wobei die E-Maschine die Drehzahl des Verbrennungsmotors regelt. Bei Handschaltgetrieben tritt der oben genannte negative Lastsprung auf, wenn der Fahrer vom Gaspedal geht und auskuppelt, um den Gang zu wechseln. Hierbei kann die Drehzahl des Verbrennungsmotors mittels der E-Maschine geregelt werden, falls dieser aus einem der oben genannten Gründe nicht sofort ausgeschaltet werden soll.

Ferner kann der negative Lastsprung bei einem Hybridantriebsstrang mit einem Automatikgetriebe auftreten, wobei der negative Lastsprung zum Schonen der Kupplung, insbesondere bei Schaltvorgängen während einer Beschleunigung auftritt. Bei Automatikgetrieben wird zum Schonen der Kupplung, insbesondere bei Schaltvorgängen in einer Beschleunigung, das Moment des Verbrennungsmotors kurzzeitig reduziert. Dies stellt ebenfalls einen negativen Lastsprung dar. Dies geschieht bei Ottomotoren insbesondere mittels Einspritzausblendung, Schließen der Drosselklappe oder einer Zündwinkelrücknahme. Die Einspritzausblendung kommt dem oben beschriebenen Ausschalten des Motors mit den eventuellen Problemen gleich, weshalb ggfs. die vorgeschlagene Strategie anzuwenden ist. Bei einer Zündwinkelrücknahme wird der Wirkungsgrad der Verbrennung bewusst verschlechtert. Gegebenenfalls ist es energetisch günstiger, mit einem wirkungsgradoptimalen Zündwinkel zu verbrennen und die überschüssige Energie elektrisch zu rekuperieren. Da der Verbrennungsmotor in diesem Fall auch während des Schaltvorgangs unter Last wäre, würde das Moment auch sofort nach Beendigung des Schaltvorganges zur Verfügung stehen, was zum Beispiel bei einem Schaltvorgang mit geschlossener Drosselklappe nicht der Fall wäre.

Es gibt eine Vielzahl von Möglichkeiten, das erfindungsgemäße Verfahren in vorteilhafter Art und Weise auszugestalten und weiterzubilden. Hierfür darf auf die dem Patentanspruch 1 nachgeordneten Patentansprüche verwiesen werden.

## Patentansprüche

1. Verfahren zur Steuerung und/oder Regelung eines Hybridantriebsstrangs eines Kraftfahrzeuges, wobei Abgas einem Abgasstrang entnommen und einer Frischluftzuvor eines Verbrennungsmotors zugeführt wird, wobei im Falle eines negativen Lastsprungs das restliche rückgeführte Abgas aus der Frischluftzufuhr gespült wird, **dadurch gekennzeichnet, dass** nach dem negativem Lastsprung der Verbrennungsmotor mit einer geringeren Last weiterläuft und gleichzeitig mittels der E-Maschine das vom Verbrennungsmotor eingespeiste Moment rekuperiert wird, wobei in Summe kein positives Moment am Ausgang des Antriebsstrangs anliegt.

2. Verfahren nach Anspruch 1, **dadurch gekennzeichnet, dass** der Verbrennungsmotor nach dem negativen Lastsprung in einem Wirkungsgrad optimalen Lastpunkt weiterbetrieben wird.

3. Verfahren nach einem der vorstehenden Ansprüche, **dadurch gekennzeichnet, dass** das vom Verbrennungsmotor eingespeiste Moment von der E-Maschine überkompensiert wird, um ein bremsendes Reibmoment eines geschleppten Verbrennungsmotors dem Fahrer darzustellen.

4. Verfahren nach einem der vorstehenden Ansprüche, **dadurch gekennzeichnet, dass** die E-Maschine motorseitig einer Kupplung angeordnet ist, wobei nach dem negativen Lastsprung die Kupplung geöffnet wird, wobei die E-Maschine im Rahmen einer Drehzahlregelung des Verbrennungsmotors die mechanische Energie rekuperiert.

5. Verfahren nach einem der vorstehenden Ansprüche, **dadurch gekennzeichnet, dass** die E-Maschine auf einer Getriebeseite der Kupplung angeordnet ist, wobei im Falle des negativen Lastsprungs die Kupplung geschlossen ist und der Antriebsstrang mittels der E-Maschine mit einem negativen Moment beaufschlagt wird.

6. Verfahren nach einem der vorstehenden Ansprüche, **dadurch gekennzeichnet, dass** der negative Lastsprung bei einem Hybridantriebsstrang mit einem Handschaltgetriebe auftritt, nachdem der Fahrer auskuppelt, um den Gang zu wechseln, wobei die E-Maschine die Drehzahl des Verbrennungsmotors regelt.

7. Verfahren nach einem der vorstehenden Ansprüche, **dadurch gekennzeichnet, dass** der negative Lastsprung bei einem Hybridantriebsstrang mit einem Automatikgetriebe auftritt, wobei der negative Lastsprung zum Schonen der Kupplung, insbesondere bei Schaltvorgängen in einer Beschleunigung auftritt, um die Kupplung zu schonen.
